# EUROPÄISCHE PATENTSCHRIFT

(11) **EP 2 368 538 B1**
(45) Veröffentlichungstag und Bekanntmachung des Hinweises auf die Patenterteilung: **03.10.2012**
(21) Anmeldenummer: 11004998.8
(22) Anmeldetag: 10.01.2007
(51) Int. Cl.: A61J 17/00

(54) **Beruhigungssauger**
Pacifier
Sucette

(30) Priorität: 16.05.2006 DE 102006022669
(43) Veröffentlichungstag der Anmeldung: 28.09.2011
(62) Teilanmeldung aus: 07711329.8
(73) Patentinhaber: MAPA GmbH, 27404 Zeven (DE)
(72) Erfinder: Itzek, Eckhard, 27404 Gyhum-Nartum (DE); Marr, Günter, 21244 Rosengarten (DE)
(74) Vertreter: Siemons, Norbert

(56) Entgegenhaltungen:
- AT-B- 396 869
- DE-A1- 4 133 064
- DE-A1- 4 229 224
- DE-A1- 4 418 604

## Beschreibung

Die Erfindung bezieht sich auf einen Beruhigungssauger mit einem Mundschild, einem daran befestigten Saugernippel und einem mit dem Mundschild und dem Saugernippel verbundenen Sicherheitsfaden.

Es ist bekannt, den Saugernippel vor einem Abtrennen infolge heftigen Saugens oder Abbeißens durch einen Sicherheitsfaden zu schützen, der zweckmäßig aus einem festeren Material besteht als der verhältnismäßig weiche Saugernippel.

Ein derartiger Beruhigungssauger ist beispielsweise aus der deutschen Patentschrift DE 4229 224 C2 bekannt. Bei dem bekannten Sauger bestehen Mundschild und Saugernippel aus einem thermoplastischen Elastomer und sind miteinander vernetzt. Ein Sicherheitsstreifen ist aus dem gleichen Material wie der Mundschild gefertigt, an beiden Enden mit dem Mundschild verbunden und umlaufend um den Saugernippel in dessen Längsrichtung geführt.

DE 4 133 064 offenbart einen Beruhigungssauger mit allen technischen Merkmalen des Oberbegriffs des Anspruchs 1.

Davon ausgehend ist die Aufgabe der Erfindung, einen Beruhigungssauger zur Verfügung zu stellen, der eine sicherere Benutzung ermöglicht.

Diese Aufgabe wird gelöst durch einen Beruhigungssauger mit den Merkmalen des Anspruchs 1. Vorteilhafte Ausgestaltungen der Erfindung sind in den Unteransprüchen angegeben.

Gemäß Anspruch 1 hat der erfindungsgemäße Beruhigungssauger einen Mundschild aus einem verhältnismäßig festen Material, einen von der Innenseite des Mundschilds vorstehenden Saugernippel aus einem verhältnismäßig weichen Material und einen mit dem Mundschild verbundenen Sicherheitsfaden, der aus dem verhältnismäßig festen Material besteht, mit dem Saugernippel verbunden ist und sich in dessen Längsrichtung erstreckt. Ein erster Abschnitt des Sicherheitsfadens verläuft in einem Abstand von denjenigen Bereichen des Saugernippels, die von der gedachten sagittalen Mittelebene des Saugernippels geschnitten werden.

Eine Richtung bezeichnende Begriffe wie sagittal, transversal oder rechts und links beziehen sich jetzt und im Folgenden auf den Kopf eines Benutzers, der den erfindungsgemäßen Beruhigungssauger im Mund hat.

Die Erfindung beruht auf der Erkenntnis, dass der durch die Verwendung eines Sicherheitsfadens aus einem festeren Material erreichbare Schutz vor einem Abbeißen des Saugernippels noch verbesserungswürdig ist. Insbesondere spielt die Anordnung des Sicherheitsfadens in Bezug auf die Zähne eine besondere Rolle. Bei der bekannten Anordnung des Sicherheitsfadens entlang einer gedachten sagittalen Mittelebene des Saugernippels befinden sich beide mit dem Mundschild verbundenen Endabschnitte des Sicherheitsstreifens an einer in Bezug auf die Zähne bzw. Zahnreihen eines Säuglings oder Kleinkinds besonders exponierten Stelle. Es kann dadurch bei intensivem Zubeißen zu einem Durchtrennen eines oder beider mit dem Mundschild verbundenen Abschnitte des Sicherheitsfadens kommen.

Bei der Erfindung wird die Gefahr des Abbeißens dadurch abgewendet, dass ein Abschnitt des Sicherheitsfadens einen Abstand von den besonders exponierten Bereichen des Saugernippels aufweist. Diese besonders exponierten Bereiche befinden sich aufgrund der anatomischen Anordnung der Zähne insbesondere in der Mitte des Saugernippels, genauer in denjenigen Bereichen des Saugernippels, die von der gedachten sagittalen Mittelebene des Saugernippels geschnitten werden, weil die Schneidezähne eines Benutzers insbesondere in diesen Bereichen zuerst auf den Saugernippel treffen. Dies gilt sowohl für die beiden unteren Schneidezähne, die bei einem Säugling in der Regel zuerst durchbrechen (sechster bis siebter Monat), als auch für die beiden oberen Schneidezähne (achter bis zehnter Monat). Der nach der Erfindung einzuhaltende Abstand zu diesen Bereichen kann in beliebiger Richtung gegeben sein, bei einem hohlen Saugernippel kann der Sicherheitsfaden beispielsweise entlang der Längsachse des Saugernippels geführt sein. Er ist dadurch zumindest durch die oberhalb und unterhalb des Sicherheitsfadens befindlichen Wandungen des Saugernippels geschützt. Sollten diese Wandungen infolge einer Benutzung des Beruhigungssaugers beschädigt worden sein, kann dies in der Regel von einer Betreuungsperson erkannt und der Beruhigungssauger ausgetauscht werden, bevor der Sicherheitsfaden durch weitere Beißbewegungen durchtrennt werden kann.

Gemäß einer bevorzugten Ausgestaltung verläuft der erste Abschnitt des Sicherheitsfadens in einem Abstand von der sagittalen Mittelebene des Saugernippels. Der Sicherheitsfaden weist somit einen seitlichen Abstand von der Mittelebene und der Längsachse des Saugernippels auf.

In einer weiteren Ausgestaltung der Erfindung ist der Sicherheitsfaden an beiden Enden mit dem Mundschild verbunden und ein zweiter Abschnitt des Sicherheitsfadens ist gegenüber dem ersten Abschnitt in Rechts-Links-Richtung beabstandet. Dadurch wird erreicht, dass zwei Abschnitte des Sicherheitsfadens die Verbindung zwischen dem Saugernippel und dem Mundschild herstellen und sich in Rechts-Links-Richtung an unterschiedlicher Stelle befinden. Um den Saugernippel von dem Mundschild trennen zu können, müssen daher Abschnitte des Sicherheitsfadens an unterschiedlichen Positionen in Bezug auf die Zahnreihen des Benutzers durchbissen werden. Die Wahrscheinlichkeit eines gleichzeitigen Durchbeißens beider Abschnitte des Sicherheitsfadens wird dadurch wesentlich verringert.

In einer bevorzugten Ausgestaltung der Erfindung sind erster und zweiter Abschnitt des Sicherheitsfadens so innerhalb des Saugernippels angeordnet, dass ihr Abstand in Rechts-Links-Richtung maximal ist. Durch den besonders großen Abstand zwischen den beiden Abschnitten des Sicherheitsfadens wird die Gefahr eines gleichzeitigen Durchtrennens weiter verringert.

Gemäß einer bevorzugten Ausgestaltung der Erfindung sind der erste und der zweite Abschnitt des Sicherheitsfadens symmetrisch zu der sagittalen Mittelebene des Beruhigungssaugers angeordnet. Eine symmetrische Anordnung bietet Vorteile bei der Fertigung und gewährleistet eine gleichmäßige Verformbarkeit des Saugernippels.

In einer weiteren Ausgestaltung der Erfindung sind der erste und/oder der zweite Abschnitt des Sicherheitsfadens in der Nähe des Mundschilds angeordnet, sodass sie sich im Bereich der Zahnreihen eines Benutzers befinden. In diesem Fall sind die erfindungsgemäß beabstandeten Abschnitte des Sicherheitsfadens gezielt im Bereich der Zahnreihen eines Benutzers, d.h. an einer bestimmten Position in Bezug auf die Längsrichtung des Saugernippels, angeordnet.

In einer weiteren Ausgestaltung der Erfindung verläuft der Sicherheitsfaden annähernd in einer transversalen Ebene. Dies begünstigt die Biegsamkeit des Saugernippels. Bei einer orthodontischen Form des Saugernippels verläuft der Sicherheitsfaden im Bereich der größten Querschnittsbreite und damit nur näherungsweise in einer transversalen Ebene. Auch dadurch bleibt ein Maximum an Flexibilität erhalten.

Gemäß einer weiteren Ausgestaltung der Erfindung ist der Sicherheitsfaden an dem von dem Mundschild abgewandten Ende des Saugernippels umgelenkt. Der Sicherheitsfaden bildet somit eine Schlaufe, die beidenends an dem Mundschild befestigt ist.

In einer weiteren bevorzugten Ausgestaltung der Erfindung ist der Saugernippel hohl. Dadurch werden die elastischen Eigenschaften des Saugernippels verbessert.

Durch eine weiterhin vorgesehene Öffnung des Saugernippels auf der dem Mundschild zugewandten Seite kann die in dem Saugernippel befindliche Luft bei einem Zusammendrücken des Saugernippels entweichen.

Gemäß einer weiteren Ausgestaltung der Erfindung ist der Saugernippel über einen umfangsseitig vorspringenden Randabschnitt mit dem Mundschild verbunden. Durch diese Formgebung des Saugernippels wird eine sichere Verbindung mit dem Mundschild begünstigt. Weiter ist der Beruhigungssauger dadurch im Bereich der Verbindung zwischen Saugernippel und Mundschild besonders weich, was den Tragekomfort erhöht.

In einer weiteren bevorzugten Ausgestaltung der Erfindung ist der Sicherheitsfaden mit dem Saugernippel im Bereich der Zahnreihen eines Benutzers und/oder im Bereich der Spitze des Saugernippels verbunden. Sofern der Saugernippel hohl und im Bereich der Zahnreihen mit dem Sicherheitsfaden verbunden ist, verläuft der Sicherheitsfaden im Bereich der Zahnreihen eines Benutzers entlang der Wandung des Saugernippels. Durch die Verbindung des Sicherheitsfadens mit dem Saugernippel in einem sich über eine gewisse Länge des Sicherheitsfadens erstreckenden Bereich behält der Saugernippel auch bei einer Beschädigung seiner Wandung besser seine Form. Eine Verbindung vorwiegend im Bereich der Spitze des Saugernippels begünstigt hingegen die Flexibilität des Saugernippels.

Weiter bevorzugt wird eine Einbettung des Sicherheitsfadens in eine Wandung des Saugernippels. Es wird dadurch eine besonders sichere Verbindung erreicht.

Gemäß einer weiteren Ausgestaltung überdeckt der Saugernippel den Sicherheitsfaden auf der einem Benutzer zugewandten Seite. Dadurch ist die Außenseite des Saugernippels vollständig von dem verhältnismäßig weichen Material des Saugernippels gebildet. Durch die gleichmäßig weiche Oberfläche wird der Tragekomfort erhöht.

Gemäß einer weiteren bevorzugten Ausgestaltung der Erfindung ist das verhältnismäßig feste Material ein thermoplastischer Kunststoff. Ebenfalls bevorzugt ist das verhältnismäßig feste Material ein thermoplastisches Elastomer. Beide Materialien eignen sich für das bevorzugt angewendete Spritzgußverfahren zur Herstellung des Mundschilds und des Sicherheitsfadens. Bei Verwendung eines thermoplastischen Elastomers wird die Materialzusammensetzung so gewählt, dass ein bei Umgebungstemperatur relativ fester Werkstoff entsteht.

Gemäß einer weiteren bevorzugten Ausgestaltung ist das verhältnismäßig weiche Material ein thermoplastisches Elastomer. Grundsätzlich eignen sich auch andere elastische Werkstoffe für den Saugernippel, beispielsweise Naturkautschuk oder Silikon. Thermoplastische Elastomere sind mehrphasige Kunststoffe, die gummielastisch verformbare Molekülbereiche aufweisen, in die Bereiche schmelzbarer amorpher Thermoplaste eingebaut sind. Sie sind daher thermoplastisch verformbar und weisen gleichzeitig die gewünschten elastischen Eigenschaften auf. Insbesondere sind Sie auch dem Spritzgußverfahren zugänglich. Dies bedeutet unter Umständen eine erhebliche Erleichterung der Fertigung.

In einer weiteren bevorzugten Ausgestaltung der Erfindung ist der Saugernippel mit dem Sicherheitsfaden und/oder dem Mundschild vernetzt. Es wird dadurch eine besonders innige Verbindung der beiden unterschiedlichen Materialien erreicht. Grundsätzlich kann die Verbindung auch auf andere Weise erzielt werden, beispielsweise durch Verkleben. Eine Vernetzung stellt jedoch eine besonders einfache und sichere Verbindungstechnik dar. Je nach Wahl des Materials kann es sich insbesondere um eine chemische Vernetzung oder um eine sog. ,,physikalische Vernetzung" handeln. Bei letzterer sind die Molekülketten nicht chemisch miteinander vernetzt, sondern lediglich ineinander verschlungen.

Gemäß einer weiteren bevorzugten Ausgestaltung der Erfindung enthält das verhältnismäßig weiche Material das gleiche Basispolymer wie das verhältnismäßig feste Material. Es ergeben sich daraus Vorteile hinsichtlich der Verbindbarkeit und Vernetzbarkeit der beiden Werkstoffe.

Gemäß einer Ausgestaltung hat der erfindungsgemäße Beruhigungssauger einen Mundschild aus einem verhältnismäßig festen Material, einen von der Innenseite des Mundschilds vorstehenden Saugernippel aus einem verhältnismäßig weichen Material und einen an dem Mundschild angeordneten Griff. Der Griff weist zwei Bügel aus dem verhältnismäßig festen Material auf, deren Enden mit dem Mundschild verbunden sind. Dieser erfindungsgemäße Beruhigungssauger kann grundsätzlich mit jedem der vorstehend genannten Merkmale kombiniert werden.

Beide Bügel sind an den Enden mit dem Mundschild verbunden und bestehen aus dem gleichen, verhältnismäßig festen Material wie der Mundschild. Sie können daher vorteilhaft in einem einzigen Verfahrensschritt mit dem Mundschild spritzgegossen werden. Es ist dadurch eine besonders einfache Herstellungsmöglichkeit eines Beruhigungssaugers mit einem Griff gegeben.

In einer bevorzugten Ausgestaltung sind die Bügel um eine Achse in der Nähe ihrer Verbindungspunkte mit dem Mundschild verschwenkt und in ihren mittleren Abschnitten miteinander verbunden. Das heißt, die an den Mundschild angeformten Bügel befinden sich bei ihrer Fertigung zunächst in einer ersten Position und sind so ausgeformt, dass sie um eine Achse in der Nähe ihrer Verbindungspunkte verschwenkt werden können. Durch Verschwenken werden die Bügel in eine zweite Position gebracht, in der die mittleren Abschnitte der beiden Bügel einander berühren. In dieser Position werden die beiden mittleren Abschnitte der Bügel miteinander verbunden. Die erste Position der Bügel kann so gewählt werden, dass das Werkstück einfach entformt werden kann. Es entsteht ein Griff, der sich an den vier Verbindungspunkten der beiden Bügel an dem Mundschild abstützt.

In einer bevorzugten Ausgestaltung der Erfindung sind die mittleren Abschnitte der beiden Bügel miteinander verschweißt. Dabei handelt es sich um eine besonders stabile und einfache Verbindung. Alternativ kann auch eine Rastverbindung vorgesehen sein.

In einer weiteren bevorzugten Ausgestaltung der Erfindung sind die mittleren Abschnitte der Bügel an ihren einander zugewandten Seiten mit Rippen versehen. Die Rippen können ein passgenaues Aufeinanderfügen der beiden Bügel erleichtern und den Verbindungsvorgang, insbesondere ein Verschweißen, erleichtern. Bei einer Ultraschallverschweißung können auch entsprechende Energierichtungsgeber vorgesehen sein.

Bei dem erfindungsgemäßen Verfahren zur Herstellung des Beruhigungssaugers werden die beiden Bügel in einer ersten, voneinander beabstandeten Position einteilig mit dem Mundschild gespritzt, anschließend durch Verschwenken der Bügel um eine Achse in der Nähe ihrer Verbindungspunkte mit dem Mundschild zusammengeführt und miteinander verschweißt.

Nachfolgend wird die Erfindung anhand von zwei in Figuren dargestellten Ausführungsbeispielen näher erläutert. Es zeigen:
- Fig. 1: einen Beruhigungssauger mit auseinander geschwenkten Griffbügeln in perspektivischer Ansicht von der vom Benutzer abgewandten Seite,
- Fig. 2: den Beruhigungssauger aus Fig. 1 mit verbundenen Griffbügeln in der Ansicht der Figur 1,
- Fig. 3: den Beruhigungssauger aus Fig. 1 im Querschnitt in einer transversalen Ebene,
- Fig. 4: den Beruhigungssauger aus Fig. 1 im teilweisen Querschnitt in einer sagittalen Ebene,
- Fig. 5: eine perspektivische Ansicht eines weiteren Ausführungsbeispiels eines Beruhigungssaugers nach der Erfindung.

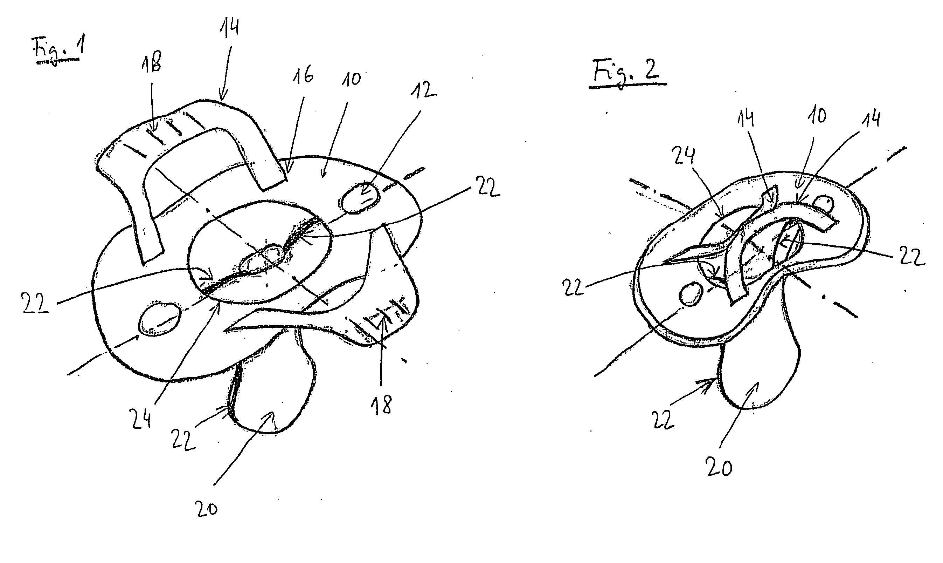

Der in Figur 1 dargestellte Beruhigungssauger besteht aus einem Mundschild 10, zwei einen Griff bildenden Bügeln 14 und einem Saugernippel 20.

Der Mundschild 10 ist im Wesentlichen konkav und der äußeren Anatomie des Mundes angepaßt. Die äußere Kontur des Mundschilds 10 ist im Wesentlichen nierenförmig mit einer Ausrundung mit großem Radius am oberen Rand als Freiraum für den Nasenansatz. Zwei Notatmungslöcher 12 sind in der rechten und linken Seite des Mundschilds 10 angeordnet. In der Mitte des Mundschilds 10 befindet sich eine annähernd elliptische Öffnung 24, an deren Randbereich der Saugernippel 20 mit dem Mundschild 10 verbunden ist.

Die beiden Bügel 14 sind jeweils an ihren beiden Enden mit der Außenseite des Mundschilds 10 verbunden. Jeder Bügel 14 ist um eine Achse, die ungefähr durch die beiden Verbindungspunkte 16 mit dem Mundschild 10 verläuft, schwenkbar, solange die beiden Bügel noch nicht miteinander verbunden sind. In einem mittleren Abschnitt jedes Bügels befinden sich Rippen 18, in deren Bereich beide Bügel 14 nach einem Verschwenken der beiden Bügel aufeinanderzu in Anlage miteinander kommen und verschweißt werden. Der Mundschild 10 und die beiden Bügel 14 bestehen aus einem verhältnismäßig festen Material, im dargestellten Beispiel aus einem thermoplastischen Kunststoff wie z.B. Polypropylen (PP).

Ebenfalls aus einem verhältnismäßig festen Material besteht der Sicherheitsfaden 22, dessen Enden an der rechten und linken Seite in den Rand der elliptischen Öffnung 24 des Mundschilds 10 übergehen. Bei der Herstellung wird der Sicherheitsfaden 22 gemeinsam mit dem Mundschild und den beiden Bügeln 14 gespritzt.

Der Saugernippel 20 besteht aus einem verhältnismäßig weichen, thermoplastischen Elastomer. Das in der Zeichnung unten dargestellte Ende des Saugernippels 20 befindet sich bei Benutzung des Beruhigungssaugers in der Mundhöhle des Benutzers, das entgegengesetzte Ende weitet sich in Form eines Trichters mit elliptischem Querschnitt bis auf den Durchmesser der Öffnung 24 auf. Der Saugernippel ist innen hohl und weist eine Öffnung auf der dem Mundschild zugewandten Seite auf, durch die die Luft aus dem Hohlraum entweichen kann. Auf der nicht sichtbaren Unterseite des Mundschilds 10 ist das aufgeweitete Ende des Saugernippels 20 mit dem Mundschild 10 verbunden.

Der Sicherheitsfaden 22 verläuft annähernd in einer transversalen Ebene entlang der Wandung des hohlen Saugernippels 20. Wie sämtliche anderen Bestandteile des Beruhigungssaugers ist auch der Sicherheitsfaden 22 symmetrisch zur sagittalen Mittelebene des Beruhigungssaugers angeordnet. Dabei befinden sich die rechts und links der sagittalen Mittelebene angeordneten Abschnitte des Sicherheitsfadens 22 stets in größtmöglichem Abstand für maximale Flexibilität und Weichheit des Saugernippels.

In der Figur 1 befinden sich die beiden Bügel 14 in einer voneinander beabstandeten Position, in welcher sie nach dem Spritzgießen leicht entformt werden können.

In der Darstellung in Figur 2 sind die beiden Bügel 14 gegenüber ihrer ersten Position verschwenkt, sodass sie in ihren mittleren Abschnitten aufeinandertreffen. In diesem Bereich sind sie miteinander verschweißt. Es entsteht dadurch ein einziger Griff, der durch die vier Enden der beiden Bügel sicher an dem Mundschild 10 befestigt ist.

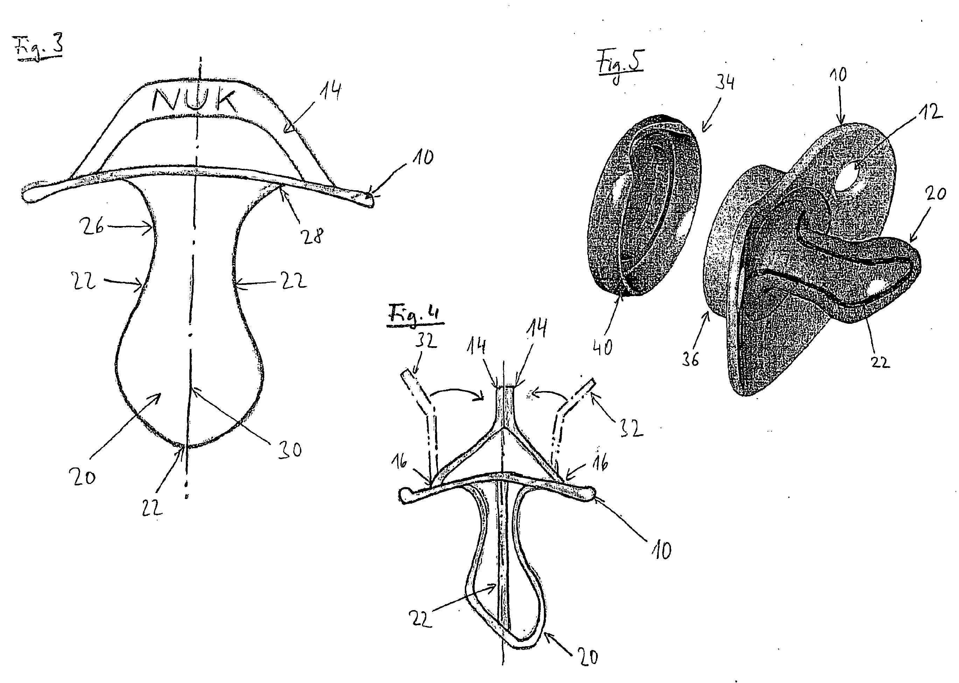

In der Querschnittsdarstellung der Figur 3 erkennt man die abgerundete Form des Saugernippels 20 und den Sicherheitsfaden 22, der in die Wandung des Saugernippels 20 eingebettet ist und in seiner gesamten Länge in der dargestellten transversalen Schnittebene verläuft. Der Sicherheitsfaden 22 geht an seinen beiden Enden nahtlos in den Mundschild 10 über. Der in Richtung des Mundschilds 10 trichterförmig aufgeweitete Saugernippel 20 weist bei 28 einen umfangsseitig vorspringenden Randabschnitt auf, der mit dem Mundschild 10 verbunden ist. Gut erkennbar ist die in Bezug auf die sagittale Mittelebene 30 vollständig symmetrische Anordnung des Sicherheitsfadens 22. Auch im Bereich der Zahnreihen, bei 26, weisen die zu beiden Seiten der sagittalen Mittelebene 30 angeordneten Abschnitte des Sicherheitsfadens 22 einen maximalen Abstand auf.

Die Figur 4 zeigt den Beruhigungssauger teilweise im Querschnitt entlang der sagittalen Mittelebene. Gut erkennbar ist die nach anatomischen Gesichtspunkten ausgeführte Formgebung des Saugernippels 20. Der Sicherheitsfaden 22 verläuft in einem Abstand von der Schnittebene der Darstellung, ist jedoch zur Illustration seines Verlaufs in einer transversalen Ebene dennoch in die Zeichnung aufgenommen. Die beiden Bügel 14 sind in ihrer zusammengefügten Position dargestellt. Zusätzlich sind die beiden Bügel 14 in einer ersten Stellung 32 gestrichelt dargestellt, um den Produktionsvorgang zu illustrieren. Die Stellung 32 entspricht der Position der Bügel 14 nach dem Spritzgießen und erleichtert eine Entformung des Werkstücks. Anschließend werden die Bügel 14 um ihre Verbindungspunkte 16 mit dem Mundschild 10 verschwenkt.

Schließlich zeigt Figur 5 ein weiteres Ausführungsbeispiels der Erfindung in einer perspektivischen Ansicht. Das dargestellte Ausführungsbeispiel unterscheidet sich von demjenigen der Figuren 1 bis 4 insbesondere dadurch, dass an der vom Benutzer abgewandten Seite des Mundschilds 10 ein sogenannter Dom 36 ausgebildet ist. Dieser Dom wird auf der benutzerabgewandten Seite von einer Abdeckkappe 34 verschlossen. Die Kappe hat eine annähernd runde Form und weist eine umlaufende Einschnürung 40 auf, die besonders griffgünstig ist.

Wahlweise kann auch eine Abdeckkappe 34 mit Aussparungen zur Befestigung eines nicht dargestellten beweglichen Rings verwendet werden.

## Patentansprüche

1. Beruhigungssauger mit einem Mundschild (10) aus einem verhältnismäßig festen Material, einem von der Innenseite des Mundschilds (10) vorstehenden, hohlen Saugernippel (20) aus einem verhältnismäßig weichen Material und einem mit dem Mundschild verbundenen Sicherheitsfaden (22), der aus dem verhältnismäßig festen Material besteht, mit dem Saugernippel (20) verbunden ist und sich in dessen Längsrichtung erstreckt, **dadurch gekennzeichnet, dass** ein erster Abschnitt des Sicherheitsfadens (22) in einem Abstand von denjenigen Bereichen des Saugernippels (20) verläuft, die von der gedachten sagittalen Mittelebene des Saugernippels (20) geschnitten werden.

2. Beruhigungssauger nach Anspruch 1, **dadurch gekennzeichnet, dass** der erste Abschnitt des Sicherheitsfadens (22) in einem Abstand von der sagittalen Mittelebene des Saugernippels (20) verläuft.

3. Beruhigungssauger nach Anspruch 1 oder 2, **dadurch gekennzeichnet, dass** der Sicherheitsfaden (22) an beiden Enden mit dem Mundschild (10) verbunden ist und ein zweiter Abschnitt des Sicherheitsfadens in Rechts-Links-Richtung gegenüber dem ersten Abschnitt beabstandet ist.

4. Beruhigungssauger nach einem der Ansprüche 1 bis 3, **dadurch gekennzeichnet, dass** erster und zweiter Abschnitt des Sicherheitsfadens (22) so innerhalb des Saugernippels (20) angeordnet sind, dass ihr Abstand in Rechts-Links-Richtung maximal ist.

5. Beruhigungssauger nach einem der Ansprüche 1 bis 4, **dadurch gekennzeichnet, dass** der erste und der zweite Abschnitt des Sicherheitsfadens (22) symmetrisch zu der sagittalen Mittelebene des Beruhigungssaugers angeordnet sind.

6. Beruhigungssauger nach einem der Ansprüche 1 bis 5, **dadurch gekennzeichnet, dass** der erste und/oder der zweite Abschnitt des Sicherheitsfadens (22) in der Nähe des Mundschilds angeordnet sind, so dass sie sich im Bereich (26) der Zahnreihen eines Benutzers befinden.

7. Beruhigungssauger nach einem der Ansprüche 1 bis 6, **dadurch gekennzeichnet, dass** der Sicherheitsfaden (22) annähernd in einer transversalen Ebene verläuft.

8. Beruhigungssauger nach einem der Ansprüche 1 bis 7, **dadurch gekennzeichnet, dass** der Sicherheitsfaden (22) an dem von dem Mundschild (10) abgewandten Ende des Saugernippels (20) umgelenkt ist.

9. Beruhigungssauger nach einem der Ansprüche 1 bis 8, dadurch gekennzeichet, dass der Saugernippel (20) eine Öffnung auf der dem Mundschild (10) zugewandten Seite besitzt.

10. Beruhigungssauger nach einem der Ansprüche 1 bis 9, **dadurch gekennzeichnet, dass** der Saugernippel (20) über einen umfangsseitig vorspringenden Randabschnitt mit dem Mundschild verbunden ist.

11. Beruhigungssauger nach einem der Ansprüche 1 bis 10, **dadurch gekennzeichnet, dass** der Sicherheitsfaden (22) mit dem Saugernippel (20) im Bereich (26) der Zahnreihen eines Benutzers und/oder im Bereich der Spitze des Saugernippels (20) verbunden ist.

12. Beruhigungssauger nach einem der Ansprüche 1 bis 11, **dadurch gekennzeichnet, dass** der Sicherheitsfaden (22) in eine Wandung des Saugernippels (20) eingebettet ist.

13. Beruhigungssauger nach einem der Ansprüche 1 bis 12, **dadurch gekennzeichnet, dass** der Saugernippel (20) den Sicherheitsfaden (22) auf der einem Benutzer zugewandten Seite überdeckt.

14. Beruhigungssauger nach einem der Ansprüche 1 bis 13, **dadurch gekennzeichnet, dass** das verhältnismäßig feste Material ein thermoplastischer Kunststoff ist und/oder oder dass das verhältnismäßig feste Material ein thermoplastisches Elastomer ist und/oder dass das verhältnismäßig weiche Material ein thermoplastisches Elastomer ist.

15. Beruhigungssauger nach Anspruch 14, **dadurch gekennzeichnet, dass** der Saugernippel (20) mit dem Sicherheitsfaden (22) und/oder dem Mundschild (10) vernetzt ist und/oder dass das verhältnismäßig weiche Material das gleiche Basispolymer enthält wie das verhältnismäßig feste Material.

## Claims

1. A pacifier with a mouth shield (10) made of a relatively hard material, a hollow nipple (20), made of a relatively soft material, projecting from the inner side of the mouth shield (10) and a safety thread (22), made from the relatively hard material and connected to the mouth shield, is connected to the nipple (20) and extends in the longitudinal direction thereof, **characterized in that** a first section of the safety thread (22) proceeds at a distance from the regions of the nipple (20) that are intersected by the imaginary midsagittal plane of the nipple (20).

2. The pacifier according to claim 1, **characterized in that** the first section of the safety thread (22) proceeds at a distance from the midsagittal plane of the nipple (20).

3. The pacifier according to claim 1 or 2, **characterized in that** the safety thread (22) is connected at both ends to the mouth shield (10), and a second section of the safety thread is spaced apart in the right-left direction with respect to the first section.

4. The pacifier according to one of the claims 1 to 3, **characterized in that** the first and second section of the safety thread (22) are disposed within the nipple (20) such that the distance thereof in the right-left direction is maximized.

5. The pacifier according to one of the claims 1 to 4, **characterized in that** the first and second section of the safety thread (22) are disposed symmetrically about the midsagittal plane of the pacifier.

6. The pacifier according to one of the claims 1 to 5, **characterized in that** the first and/or the second section of the safety thread (22) are disposed near the mouth shield such that they are located in the region (26) of the tooth rows of a user.

7. The pacifier according to one of the claims 1 to 6, **characterized in that** the safety thread (22) proceeds approximately in a transverse plane.

8. The pacifier according to one of the claims 1 to 7, **characterized in that** the safety thread (22) is redirected at the end of the nipple (20) facing away from the mouth shield (10).

9. The pacifier according to one of the claims 1 to 8, **characterized in that** the nipple (20) has an opening on the side facing toward the mouth shield (10).

10. The pacifier according to one of the claims 1 to 9, **characterized in that** the nipple (20) is connected to the mouth shield via an edge section projecting on the circumference.

11. The pacifier according to one of the claims 1 to 10, **characterized in that** the safety thread (22) is connected to the nipple (20) in the region (26) of the tooth rows of a user and/or in the region of the tip of the nipple (20).

12. The pacifier according to one of the claims 1 to 11, **characterized in that** the safety thread (22) is embedded in a wall of the nipple (20).

13. The pacifier according to one of the claims 1 to 12, **characterized in that** the nipple (20) covers the safety thread (22) on the side facing toward a user.

14. The pacifier according to one of the claims 1 to 13, **characterized in that** the relatively hard material is a thermoplastic plastic material, and/or that the relatively hard material is a thermoplastic elastomer, and/or that the relatively soft material is a thermoplastic elastomer.

15. The pacifier according to claim 14, **characterized in that** the nipple (20) is crosslinked with the safety thread (22) and/or the mouth shield (10), and/or the relatively soft material contains the same base polymer as the relatively hard material.

## Revendications

1. Sucette comprenant une plaque buccale (10) formée d'un matériau proportionnellement solide, une tétine (20) creuse dépassant de la face interne de la plaque buccale (10) formée d'un matériau proportionnellement souple, et un fil de sécurité (22) relié à la plaque buccale, qui est formé d'un matériau proportionnellement solide, est relié à la tétine (20) et s'étend dans la direction longitudinale de celle-ci, **caractérisée en ce qu'**une première section du fil de sécurité (22) court à une distance des zones respectives de la tétine (20) qui sont découpées par le plan central sagittal imaginaire de la tétine (20).

2. Sucette selon la revendication 1, **caractérisée en ce que** la première section du fil de sécurité (22) court à une distance du plan central sagittal de la tétine (20).

3. Sucette selon les revendications 1 ou 2, **caractérisée en ce que** le fil de sécurité (22) est relié aux deux extrémités à la plaque buccale (10) et une seconde section du fil de sécurité est espacée, dans la direction droite-gauche, par rapport à la première section.

4. Sucette selon une des revendications 1 à 3, **caractérisée en ce que** les première et seconde sections du fil de sécurité (22) sont agencées à l'intérieur de la tétine (20) de telle sorte que leur espacement est maximal dans la direction droite-gauche.

5. Sucette selon une des revendications 1 à 4, **caractérisée en ce que** les première et seconde sections du fil de sécurité (22) sont agencées symétriquement par rapport au plan central sagittal de la sucette.

6. Sucette selon une des revendications 1 à 5, **caractérisée en ce que** les première et/ou seconde sections du fil de sécurité (22) sont agencées à proximité de la plaque buccale, de sorte qu'elles se trouvent dans la zone (26) des rangées de dents d'un utilisateur.

7. Sucette selon une des revendications 1 à 6, **caractérisée en ce que** le fil de sécurité (22) s'étend approximativement dans un plan transversal.

8. Sucette selon une des revendications 1 à 7, **caractérisée en ce que** le fil de sécurité (22) est dévié au niveau de l'extrémité opposée à la plaque buccale (10) de la tétine (20).

9. Sucette selon une des revendications 1 à 8, **caractérisée en ce que** la tétine (20) possède une ouverture sur la face dirigée vers la plaque buccale (10).

10. Sucette selon une des revendications 1 à 9, **caractérisée en ce que** la tétine (20) est reliée à la plaque buccale par une section marginale en saillie sur la face périphérique.

11. Sucette selon une des revendications 1 à 10, **caractérisée en ce que** le fil de sécurité (22) est relié à la tétine (20) dans la zone (26) des rangées de dents d'un utilisateur et/ou dans la zone de la pointe de la tétine (20).

12. Sucette selon une des revendications 1 à 11, **caractérisée en ce que** le fil de sécurité (22) est encastré dans une paroi de la tétine (20).

13. Sucette selon une des revendications 1 à 12, **caractérisée en ce que** la tétine (20) recouvre le fil de sécurité (22) sur la face dirigée vers un utilisateur.

14. Sucette selon une des revendications 1 à 13, **caractérisée en ce que** le matériau proportionnellement solide est un matériau synthétique thermoplastique et/ou **en ce que** le matériau proportionnellement solide est un élastomère thermoplastique et/ou le matériau proportionnellement souple est un élastomère thermoplastique.

15. Sucette selon la revendication 14, **caractérisée en ce que** la tétine (20) est réticulée avec le fil de sécurité (22) et/ou la plaque buccale (10) et/ou **en ce que** le matériau proportionnellement souple contient le même polymère de base que le matériau proportionnellement solide.
